# EUROPÄISCHE PATENTANMELDUNG

(11) **EP 3 928 903 A1**
(43) Veröffentlichungstag der Anmeldung: **29.12.2021**
(21) Anmeldenummer: 20181945.5
(22) Anmeldetag: 24.06.2020
(51) Int. Cl.: B23B 51/04, B23D 61/04, B23P 15/28, B24D 5/06, B24D 5/12, B24D 7/06, B24D 18/00, B24D 99/00, B28D 1/04, B28D 1/12, B22F 3/02, B22F 3/10, B22F 7/06, B22F 7/08, B22F 5/00

(54) **VERFAHREN ZUR HERSTELLUNG EINES BEARBEITUNGSSEGMENTES MIT EINEM ÜBERSTAND DER HARTSTOFFPARTIKEL AN DEN SEITENFLÄCHEN DES BEARBEITUNGSSEGMENTES**

(71) Anmelder: Hilti Aktiengesellschaft, 9494 Schaan (LI)
(72) Erfinder: Britt, Thomas, 8890 Flums (CH); Stracke, Jens, 6800 Feldkirch (AT); Hoop, Matthaeus, 9492 Eschen (LI); Szabó, József, 6000 KECSKEMÉT (HU)
(74) Vertreter: Hilti Aktiengesellschaft Corporate Intellectual Property

(57) **Zusammenfassung**

Verfahren zur Herstellung eines Bearbeitungssegmentes (51) für ein Bearbeitungswerkzeug aus einem pulver- oder granulatförmigen ersten Matrixwerkstoff (56), ersten Hartstoffpartikeln (57), die gemäß einem definierten ersten Partikelmuster angeordnet werden, und zweiten Hartstoffpartikeln (58), die gemäß einem definierten zweiten Partikelmuster angeordnet werden, wobei das Bearbeitungssegment mit einer Unterseite (61) mit einem Grundkörper des Bearbeitungswerkzeuges verbunden wird. Das Bearbeitungssegment (51) weist an den Seitenflächen einen Überstand der zweiten Hartstoffpartikel (58) gegenüber dem ersten Matrixwerkstoff (56) auf.

## Beschreibung

### Technisches Gebiet

Die vorliegende Erfindung betrifft ein Verfahren zur Herstellung eines Bearbeitungssegmentes gemäß dem Oberbegriff des Anspruchs 1.

### Stand der Technik

Bearbeitungswerkzeuge, wie Kernbohrkronen, Sägeblätter, Abtragscheiben und Trennschleifketten, umfassen Bearbeitungssegmente, die an einem rohr-, scheiben- oder ringförmigen Grundkörper befestigt werden, wobei die Bearbeitungssegmente durch Schweißen, Löten oder Kleben mit dem Grundkörper verbunden werden. Abhängig vom Bearbeitungsverfahren des Bearbeitungswerkzeugs werden Bearbeitungssegmente, die zum Kernbohren eingesetzt werden, als Bohrsegmente, Bearbeitungssegmente, die zum Sägen eingesetzt werden, als Sägesegmente, Bearbeitungssegmente, die zum Abtragen eingesetzt werden, als Abtragsegmente und Bearbeitungssegmente, die zum Trennschleifen eingesetzt werden, als Trennschleifsegmente bezeichnet.

Bearbeitungssegmente für Kernbohrkronen, Sägeblätter, Abtragscheiben und Trennschleifketten werden aus einem Matrixwerkstoff und Hartstoffpartikeln hergestellt, wobei die Hartstoffpartikel statistisch verteilt vorliegen können oder gemäß einem definierten Partikelmuster im Matrixwerkstoff angeordnet sind. Bei Bearbeitungssegmenten mit statistisch verteilten Hartstoffpartikeln werden der Matrixwerkstoff und die Hartstoffpartikel gemischt, die Mischung wird in eine passende Werkzeugform eingefüllt und zum Bearbeitungssegment weiterverarbeitet. Bei Bearbeitungssegmenten mit definiert angeordneten Hartstoffpartikeln wird ein Grünling schichtweise aus Matrixwerkstoff aufgebaut, in den die Hartstoffpartikel gemäß dem definierten Partikelmuster angeordnet werden. Bei Bearbeitungssegmenten, die mit dem Grundkörper des Bearbeitungswerkzeuges verschweißt werden sollen, hat sich der Aufbau aus einer Bearbeitungszone und einer Neutralzone bewährt, da einige Kombinationen aus Matrixwerkstoff und Grundkörper nicht schweißbar sind. Die Bearbeitungszone wird aus einem ersten Matrixwerkstoff und die Neutralzone aus einem zweiten Matrixwerkstoff, der vom ersten Matrixwerkstoff verschieden und mit dem Grundkörper schweißbar ist, aufgebaut.

Bei Bearbeitungswerkzeugen, die als Kernbohrkrone, Sägeblatt, Abtragscheibe oder Trennschleifkette ausgebildet sein können und für die Nass- oder Trockenbearbeitung von Betonwerkstoffen vorgesehen sind, kann es an den Seitenflächen der Bearbeitungssegmente durch Reibung mit dem Untergrund zu einem verstärkten Verschleiß kommen. Dabei hängt der Verschleiß insbesondere von den Verschleißeigenschaften des ersten Matrixwerkstoffes ab. Aus EP 1 295 928 B1 ist es bekannt, den Verschleiß an den Seitenflächen der Bearbeitungssegmente durch zweite Hartstoffpartikel zu reduzieren, die als statistisch verteilte Hartstoffpartikel dem ersten Matrixwerkstoff beigemischt werden. Nachteilig ist, dass die zweiten Hartstoffpartikel vollständig in den ersten Matrixwerkstoff eingebettet sind. Um die zweiten Hartstoffpartikel an den Seitenflächen freizustellen, müssen die Bearbeitungssegmente an den Seitenflächen geschärft werden.

### Darstellung der Erfindung

Die Aufgabe der vorliegenden Erfindung besteht darin, ein Verfahren zur Herstellung eines Grünlings für ein Bearbeitungssegment zu entwickeln, mit dem Bearbeitungssegmente hergestellt werden können, die einen geringen Verschleiß an den Seitenflächen der Bearbeitungssegmente aufweisen. Dabei sollen sowohl bei der Herstellung des Grünlings als auch bei der Weiterverarbeitung des Grünlings in das Bearbeitungssegment herkömmliche Werkzeugkomponenten verwendet werden; der Einsatz von speziellen Werkzeugkomponenten soll vermieden werden. Außerdem soll keine Nachbearbeitung der Bearbeitungssegmente an den Seitenflächen erforderlich sein.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Bearbeitungssegmentes aus einem pulver- oder granulatförmigen ersten Matrixwerkstoff, ersten Hartstoffpartikeln, die gemäß einem definierten ersten Partikelmuster angeordnet werden, und zweiten Hartstoffpartikeln, die gemäß einem definierten zweiten Partikelmuster angeordnet werden, ist erfindungsgemäß dadurch gekennzeichnet, dass beim Verdichten des Grünlings zwischen dem ersten Pressstempel und dem Grünling eine erste Folie aus einem Folienmaterial und zwischen dem zweiten Pressstempel und dem Grünling eine zweite Folie aus dem Folienmaterial angeordnet wird, wobei das Folienmaterial eine Härte aufweist, die geringer als die Härte des ersten Matrixwerkstoffes ist.

Bearbeitungssegmente, die mit dem erfindungsgemäßen Verfahren hergestellt werden, werden in einem dreistufigen Verfahren hergestellt: In einer ersten Stufe wird ein Grünling aus dem ersten Matrixwerkstoff, den ersten Hartstoffpartikeln und zweiten Hartstoffpartikeln aufgebaut, wobei die ersten und zweiten Hartstoffpartikel gemäß einem definierten ersten bzw. zweiten Partikelmuster im ersten Matrixwerkstoff angeordnet werden, in einer zweiten Stufe wird der Grünling unter Druckeinwirkung zu einem Pressling verdichtet und in einer dritten Stufe wird der Pressling unter Temperatureinwirkung zum Bearbeitungssegment weiterverarbeitet.

Bearbeitungssegmente, die mittels des erfindungsgemäßen Verfahrens zur Herstellung eines Bearbeitungssegmentes hergestellt werden, weisen an den Seitenflächen einen Überstand der zweiten Hartstoffpartikel gegenüber dem ersten Matrixwerkstoff auf. Das erfindungsgemäße Verfahren zur Herstellung eines Bearbeitungssegmentes zeichnet sich dadurch aus, dass die Grünlinge liegend aufgebaut werden, d.h. die Aufbaurichtung verläuft senkrecht zur Höhenrichtung zwischen der Unterseite und Oberseite des Bearbeitungssegmentes und beim Verdichten eine erste und zweite Folie aus einem Folienmaterial verwendet wird, wobei die Härte des Folienmaterials geringer als die Härte des ersten Matrixwerkstoffes ist.

Der Überstand der zweiten Hartstoffpartikel an den Seitenflächen der Bearbeitungssegmente wird mittels der ersten Folie und zweiten Folie erzeugt, wobei das Folienmaterial der ersten und zweiten Folie vom ersten Matrixwerkstoff verschieden ist. Die erste Folie wird zwischen dem ersten Pressstempel, der die erste Seitenfläche formt, und dem Grünling und die zweite Folie zwischen dem zweiten Pressstempel, der die zweite Seitenfläche formt, und dem Grünling angeordnet. Als erster und zweiter Pressstempel können herkömmliche Pressstempel verwendet werden; es sind keine speziellen Pressstempel mit Vertiefungen in der Pressfläche erforderlich.

Bevorzugt werden die zweiten Hartstoffpartikel beim Aufbau des Grünlings an der ersten und zweiten Seitenfläche vollständig in den ersten Matrixwerkstoff eingebettet. Die erste Folie, die zwischen dem ersten Pressstempel und dem Grünling angeordnet wird, und die zweite Folie, die zwischen dem ersten Pressstempel und dem Grünling angeordnet wird, sorgen dafür, dass die zweiten Hartstoffpartikel nach dem Verdichten an der ersten und zweiten Seitenfläche einen Überstand gegenüber dem ersten Matrixwerkstoff aufweisen. Das erfindungsgemäße Verfahren hat den Vorteil, dass der Überstand der zweiten Hartstoffpartikel bei der Herstellung des Bearbeitungssegmentes erzeugt wird und an den Seitenflächen keine Nachbearbeitung der Bearbeitungssegmente erforderlich ist.

In einer ersten Ausführungsform des Verfahrens werden die erste Folie und zweite Folie nach dem Verdichten vom Pressling entfernt. Wenn die erste und zweite Folie nach dem Verdichten vom Pressling entfernt werden, erfolgt die Weiterverarbeitung des Presslings in das Bearbeitungssegment durch Freiformsintern ohne weitere Formgebung.

In einer zweiten, alternativen Ausführungsform des Verfahrens wird der Pressling mit der ersten Folie und zweiten Folie zum Bearbeitungssegment weiterverarbeitet. Wenn der Pressling mit der ersten und zweiten Folie zum Bearbeitungssegment weiterverarbeitet wird, bestimmen die Eigenschaften des Folienmaterials, insbesondere die Schmelztemperatur und der Flammpunkt, das Verhalten des Folienmaterials bei der Weiterverarbeitung.

In einer ersten Variante wird das Folienmaterial so ausgewählt, dass die Schmelztemperatur des Folienmaterials niedriger als die Sintertemperatur des ersten Matrixwerkstoffes ist. Wenn die Schmelztemperatur des Folienmaterials niedriger als die Sintertemperatur des ersten Matrixwerkstoffes ist, verändert das Folienmaterial beim Aufheizen seinen Zustand und verflüssigt sich, bevor der erste Matrixwerkstoff versintert. Das flüssige Folienmaterial verteilt sich während des Sinterprozesses im ersten Matrixwerkstoff und kann den Sintervorgang als Infiltrat unterstützen.

In einer zweiten Variante wird das Folienmaterial so ausgewählt, dass der Flammpunkt des Folienmaterials niedriger als die Sintertemperatur des ersten Matrixwerkstoffes ist. Wenn der Flammpunkt des Folienmaterials niedriger als die Sintertemperatur des ersten Matrixwerkstoffes ist, verändert das Folienmaterial beim Aufheizen seinen Zustand und verdampft, bevor der erste Matrixwerkstoff versintert.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: zwei Varianten eines als Kernbohrkrone ausgebildeten Bearbeitungswerkzeuges;
- FIGN. 2A, B: zwei Varianten eines als Sägeblatt ausgebildeten Bearbeitungswerkzeuges;
- FIG. 3: ein als Abtragscheibe ausgebildetes Bearbeitungswerkzeug;
- FIG. 4: ein als Trennschleifkette ausgebildetes Bearbeitungswerkzeug;
- FIGN. 5A-C: ein Bearbeitungssegment, das mittels des erfindungsgemäßen Verfahrens hergestellt wurde, bei dem ein Grünling (FIG. 5A) zu einem Pressling (FIG. 5B) verdichtet und zum Bearbeitungssegment (FIG. 5C) weiterverarbeitet wird; und
- FIGN. 6A-C: ein weiteres Bearbeitungssegment, das mittels des erfindungsgemäßen Verfahrens hergestellt wurde, bei dem ein Grünling (FIG. 6A) zu einem Pressling (FIG. 6B) verdichtet und zum Bearbeitungssegment (FIG. 6C) weiterverarbeitet wird.

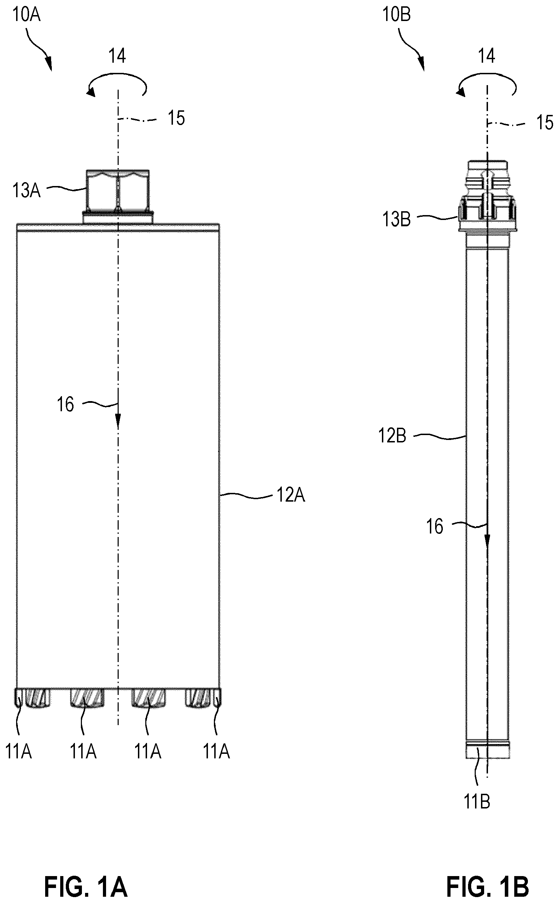

**FIGN. 1A****, B** zeigen zwei Varianten eines als Kernbohrkrone **10A, 10B** ausgebildeten Bearbeitungswerkzeuges. Die in FIG. 1A dargestellte Kernbohrkrone 10A wird im Weiteren als erste Kernbohrkrone und die in FIG. 1B dargestellte Kernbohrkrone 10B als zweite Kernbohrkrone bezeichnet, ausserdem werden die erste und zweite Kernbohrkrone 10A, 10B unter dem Begriff "Kernbohrkrone" zusammengefasst.

Die erste Kernbohrkrone 10A umfasst mehrere Bearbeitungssegmente **11A,** einen rohrförmig ausgebildeten Grundkörper **12A** und eine Werkzeugaufnahme **13A.** Die Bearbeitungssegmente 11A, die zum Kernbohren eingesetzt werden, werden auch als Bohrsegmente bezeichnet und der rohrförmig ausgebildete Grundkörper 12A wird auch als Bohrschaft bezeichnet. Die Bohrsegmente 11A sind fest mit dem Bohrschaft 12A verbunden, beispielsweise durch Schrauben, Kleben, Löten oder Schweißen.

Die zweite Kernbohrkrone 10B umfasst ein ringförmiges Bearbeitungssegment **11B**, einen rohrförmig ausgebildeten Grundkörper **12B** und eine Werkzeugaufnahme **13B.** Das ringförmige Bearbeitungssegment 11B, das zum Kernbohren eingesetzt wird, wird auch als Bohrring bezeichnet und der rohrförmig ausgebildete Grundkörper 12B wird auch als Bohrschaft bezeichnet. Der Bohrring 11B ist fest mit dem Bohrschaft 12B verbunden, beispielsweise durch Schrauben, Kleben, Löten oder Schweißen.

Die Kernbohrkrone 10A, 10B wird über die Werkzeugaufnahme 13A, 13B mit einem Kernbohrgerät verbunden und im Bohrbetrieb vom Kernbohrgerät in einer Drehrichtung **14** um eine Drehachse **15** angetrieben. Während der Drehung der Kernbohrkrone 10A, 10B um die Drehachse 15 wird die Kernbohrkrone 10A, 10B entlang einer Vorschubrichtung **16** in ein zu bearbeitendes Werkstück bewegt, wobei die Vorschubrichtung 16 parallel zur Drehachse 15 verläuft. Die Kernbohrkrone 10A, 10B erzeugt im zu bearbeitenden Werkstück einen Bohrkern und ein Bohrloch.

Der Bohrschaft 12A, 12B ist im Ausführungsbeispiel der FIGN. 1A, B einteilig ausgebildet und die Bohrsegmente 11A bzw. der Bohrring 11B sind fest mit dem Bohrschaft 12A, 12B verbunden. Alternativ kann der Bohrschaft 12A, 12B zweiteilig aus einem ersten Bohrschaftabschnitt und einem zweiten Bohrschaftabschnitt ausgebildet sein, wobei die Bohrsegmente 11A bzw. der Bohrring 11B fest mit dem ersten Bohrschaftabschnitt und die Werkzeugaufnahme 13A, 13B fest mit dem zweiten Bohrschaftabschnitt verbunden ist. Der erste und zweite Bohrschaftabschnitt werden über eine lösbare Verbindungseinrichtung miteinander verbunden. Die lösbare Verbindungseinrichtung ist beispielsweise als Steck-Dreh-Verbindung, wie in EP 2 745 965 A1 oder EP 2 745 966 A1 beschrieben, ausgebildet. Die Ausbildung des Bohrschaftes als einteiliger oder zweiteiliger Bohrschaft hat keinen Einfluss auf den Aufbau der Bohrsegmente 11A bzw. des Bohrringes 11B.

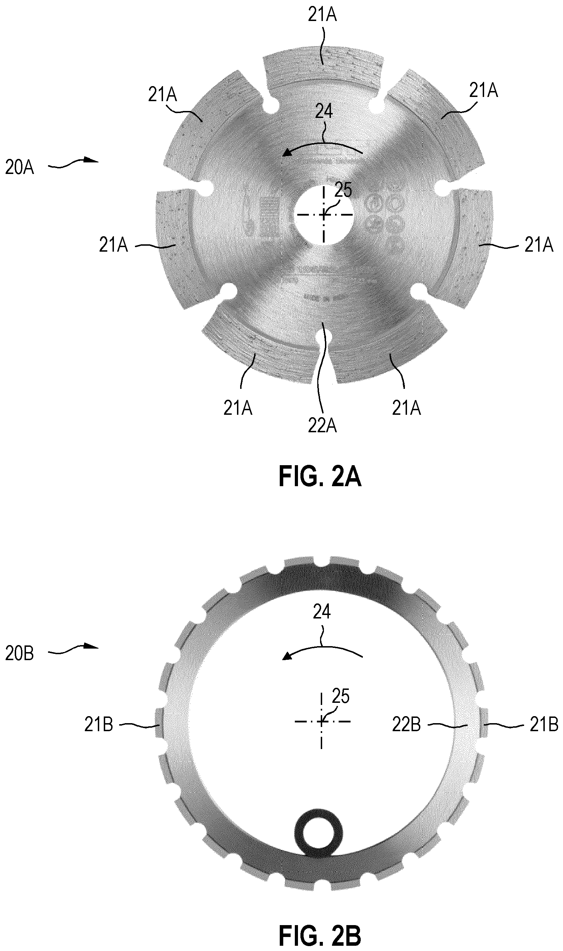

**FIGN. 2A****, B** zeigen zwei Varianten eines als Sägeblatt **20A, 20B** ausgebildeten Bearbeitungswerkzeuges. Das in FIG. 2A dargestellte Sägeblatt 20A wird im Weiteren als erstes Sägeblatt und das in FIG. 2B dargestellte Sägeblatt 20B als zweites Sägeblatt bezeichnet, ausserdem werden das erste und zweite Sägeblatt 20A, 20B unter dem Begriff "Sägeblatt" zusammengefasst.

Das erste Sägeblatt 20A umfasst mehrere Bearbeitungssegmente **21A,** einen scheibenförmig ausgebildeten Grundkörper **22A** und eine Werkzeugaufnahme. Die Bearbeitungssegmente 21A, die zum Sägen eingesetzt werden, werden auch als Sägesegmente bezeichnet und der scheibenförmig ausgebildete Grundkörper 22A wird auch als Stammblatt bezeichnet. Die Sägesegmente 21A sind fest mit dem Stammblatt 22A verbunden, beispielsweise durch Schrauben, Kleben, Löten oder Schweißen.

Das zweite Sägeblatt 20B umfasst mehrere Bearbeitungssegmente **21B,** einen ringförmig ausgebildeten Grundkörper **22B** und eine Werkzeugaufnahme. Die Bearbeitungssegmente 21B, die zum Sägen eingesetzt werden, werden auch als Sägesegmente bezeichnet und der ringförmig ausgebildete Grundkörper 22B wird auch als Ring bezeichnet. Die Sägesegmente 21B sind fest mit dem Ring 22B verbunden, beispielsweise durch Schrauben, Kleben, Löten oder Schweißen.

Das Sägeblatt 20A, 20B wird über die Werkzeugaufnahme mit einer Säge verbunden und im Sägebetrieb von der Säge in einer Drehrichtung **24** um eine Drehachse **25** angetrieben. Während der Drehung des Sägeblattes 20A, 20B um die Drehachse 25 wird das Sägeblatt 20A, 20B entlang einer Vorschubrichtung bewegt, wobei die Vorschubrichtung parallel zur Längsebene des Sägeblattes 20A, 20B verläuft. Das Sägeblatt 20A, 20B erzeugt im zu bearbeitenden Werkstück einen Sägeschlitz.

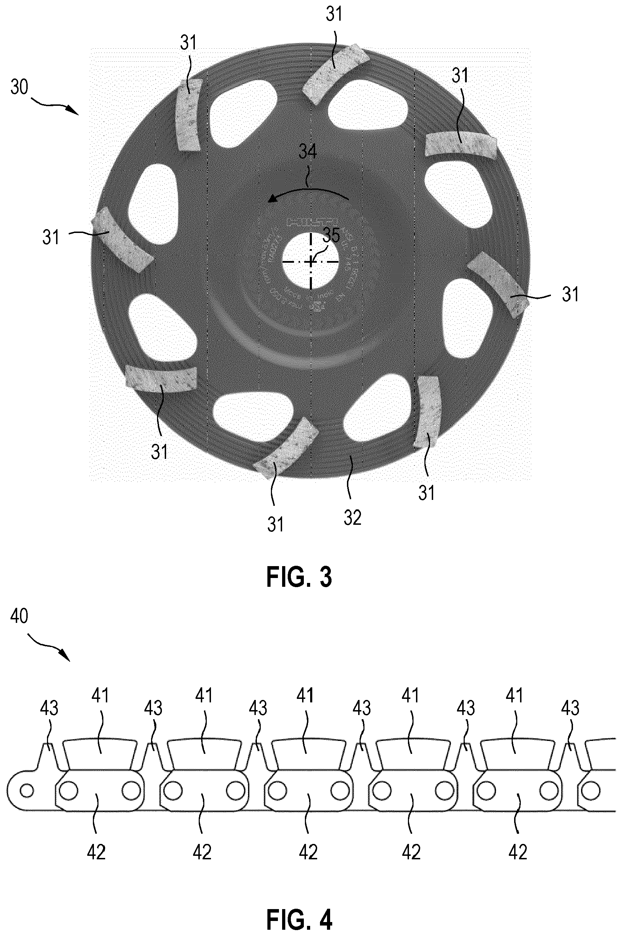

**FIG. 3** zeigt ein als Abtragscheibe **30** ausgebildetes Bearbeitungswerkzeug. Die Abtragscheibe 30 umfasst mehrere Bearbeitungssegmente **31,** einen Grundkörper **32** und eine Werkzeugaufnahme. Die Bearbeitungssegmente 31, die zum Abtragen eingesetzt werden, werden auch als Abtragsegmente bezeichnet und der scheibenförmig ausgebildete Grundkörper 32 wird auch als Topf bezeichnet. Die Abtragsegmente 31 sind fest mit dem Topf 32 verbunden, beispielsweise durch Schrauben, Kleben, Löten oder Schweißen.

Die Abtragscheibe 30 wird über die Werkzeugaufnahme mit einem Werkzeuggerät verbunden und im Abtragbetrieb vom Werkzeuggerät in einer Drehrichtung **34** um eine Drehachse **35** angetrieben. Während der Drehung der Abtragscheibe 30 um die Drehachse 35 wird die Abtragscheibe 30 über ein zu bearbeitendes Werkstück bewegt, wobei die Bewegung der senkrecht zur Drehachse 35 verläuft. Die Abtragscheibe 30 entfernt die Oberfläche des zu bearbeitenden Werkstücks.

**FIG. 4** zeigt ein als Trennschleifkette **40** ausgebildetes Bearbeitungswerkzeug. Die Trennschleifkette 40 umfasst mehrere Bearbeitungssegmente **41,** mehrere gliedförmig ausgebildete Grundkörper **42** und mehrere Verbindungsglieder **43.** Die Bearbeitungssegmente 41, die zum Trennschleifen eingesetzt werden, werden auch als Trennschleifsegmente bezeichnet und die gliedförmig ausgebildeten Grundkörper 42 werden auch als Treibglieder bezeichnet.

Die Treibglieder 42 werden über die Verbindungsglieder 43 verbunden. Im Ausführungsbeispiel sind die Verbindungsglieder 43 über Nietbolzen mit den Treibgliedern 42 verbunden. Die Nietbolzen ermöglichen eine Drehung der Treibglieder 42 relativ zu den Verbindungsgliedern 43 um eine Drehachse, die durch das Zentrum der Nietbolzen verläuft. Die Bearbeitungssegmente 41 sind fest mit den Treibgliedern 42 verbunden, beispielsweise durch Schrauben, Kleben, Löten oder Schweißen.

Die Trennschleifkette 40 wird über eine Werkzeugaufnahme mit einem Werkzeuggerät verbunden und im Betrieb vom Werkzeuggerät in einer Drehrichtung angetrieben. Während der Drehung der Trennschleifkette 40 wird die Trennschleifkette 40 in ein zu bearbeitendes Werkstück bewegt.

Die Herstellung eines Bearbeitungssegmentes **51,** das einen geringen Verschleiß an den Seitenflächen aufweist, erfolgt mittels des erfindungsgemäßen Verfahrens zur Herstellung eines Bearbeitungssegmentes in drei Stufen: In einer ersten Stufe wird ein Grünling **52** hergestellt, in einer zweiten Stufe wird der Grünling 52 zu einem Pressling **53** verdichtet und in einer dritten Stufe wird der Pressling 53 zum Bearbeitungssegment 51 weiterverarbeitet.

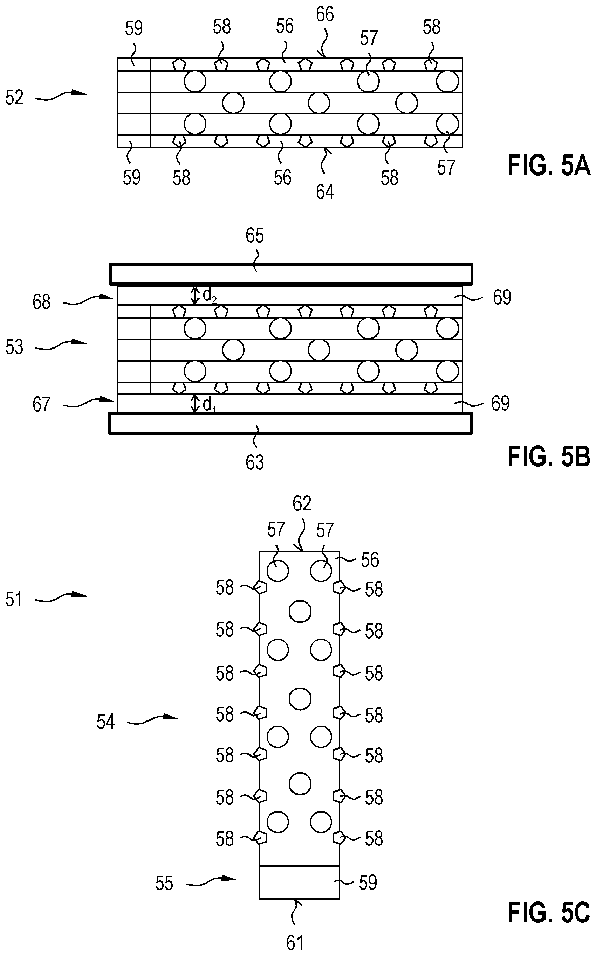

**FIGN. 5A - C** zeigen den Grünling 52 (FIG. 5A), den Pressling 53 (FIG. 5B) und das Bearbeitungssegment 51 (FIG. 5C). Das Bearbeitungssegment 51 ist aus einer Bearbeitungszone **54** und einer Neutralzone **55** aufgebaut. Die Neutralzone 55 ist erforderlich, wenn das Bearbeitungssegment 51 mit dem Grundkörper eines Bearbeitungswerkzeuges verschweißt werden soll und die Kombination aus Matrixwerkstoff und Grundkörper nicht schweißbar ist; bei schweißbaren Kombinationen aus Matrixwerkstoff und Grundkörper kann die Neutralzone 55 entfallen.

Die Bearbeitungszone 54 ist aus einem pulver- oder granulatförmigen ersten Matrixwerkstoff **56,** ersten Hartstoffpartikeln **57,** die gemäß einem definierten ersten Partikelmuster angeordnet sind, und zweiten Hartstoffpartikeln **58,** die gemäß einem definierten zweiten Partikelmuster angeordnet sind, aufgebaut und die Neutralzone 55 ist aus einem pulver- oder granulatförmigen zweiten Matrixwerkstoff **59** aufgebaut. Unter dem Begriff "Matrixwerkstoff" werden sämtliche Werkstoffe zum Aufbau von Bearbeitungssegmenten zusammengefasst, in die Hartstoffpartikel eingebettet werden können. Matrixwerkstoffe können aus einem Werkstoff bestehen oder als Gemisch aus verschiedenen Werkstoffen zusammengesetzt sein. Unter dem Begriff "Hartstoffpartikel" werden sämtliche Schneidmittel für Bearbeitungssegmente zusammengefasst; dazu gehören vor allem einzelne Hartstoffpartikel, Verbundteile aus mehreren Hartstoffpartikeln und beschichtete oder gekapselte Hartstoffpartikel.

Das Bearbeitungssegment 51 entspricht vom Aufbau und der Zusammensetzung den Bearbeitungssegmenten 11A, 21A, 21B, 31, 41; das als Bohrring ausgebildete Bearbeitungssegment 11B unterscheidet sich durch seinen ringförmigen Aufbau vom Bearbeitungssegment 51. Die Bearbeitungssegmente können sich in den Abmessungen und in den Krümmungen der Oberflächen voneinander unterscheiden. Der Aufbau der Bearbeitungssegmente wird anhand des Bearbeitungssegmentes 51 erklärt und gilt für die Bearbeitungssegmente 11A, 21A, 21B, 31, 41.

Das Bearbeitungssegment 51 umfasst die ersten und zweiten Hartstoffpartikel 57, 58, die im ersten Matrixwerkstoff 56 angeordnet sind. Als "erste Hartstoffpartikel" werden die Hartstoffpartikel des Bearbeitungssegmentes 51 bezeichnet, die einen Untergrund bearbeiten, wobei die Anzahl der ersten Hartstoffpartikel 57 und das definierte erste Partikelmuster an die Anforderungen des Bearbeitungssegmentes 51 angepasst werden. Abhängig von den Verschleißeigenschaften des ersten Matrixwerkstoffes 56 kann es während der Bearbeitung eines Untergrundes mit dem Bearbeitungssegment 51 durch Reibung mit dem Untergrund zu einem verstärkten Verschleiß des ersten Matrixwerkstoffes 56 an den Seitenflächen des Bearbeitungssegmentes 51 kommen. Dieser Verschleiß wird durch die zweiten Hartstoffpartikel 58 reduziert.

Die ersten und zweiten Hartstoffpartikel 57, 58 entstammen in der Regel Partikelverteilungen, die durch einen minimalen Durchmesser, einen maximalen Durchmesser und einen mittleren Durchmesser charakterisiert sind. Im Ausführungsbeispiel der FIGN. 5A-C entstammen die ersten Hartstoffpartikel 57 einer ersten Partikelverteilung mit einem ersten mittleren Durchmesser und die zweiten Hartstoffpartikel 58 einer zweiten Partikelverteilung mit einem zweiten mittleren Durchmesser, wobei der erste mittlere Durchmesser grösser als der zweite mittlere Durchmesser ist. Alternativ können die ersten und zweiten Hartstoffpartikel 57, 58 der gleichen Partikelverteilung entstammen und den gleichen mittleren Durchmesser aufweisen.

Das Bearbeitungssegment 51 wird mit einer Unterseite 61 mit dem Grundkörper eines Bearbeitungswerkzeuges verbunden. Bei dem in FIG. 5C gezeigten Bearbeitungssegment 51 sind die ersten Hartstoffpartikel 57 gemäß dem definierten ersten Partikelmuster in mehreren Partikelschichten im ersten Matrixwerkstoff 56 angeordnet und die zweiten Hartstoffpartikel 58 sind gemäß dem definierten zweiten Partikelmuster an den Seitenflächen des Bearbeitungssegmentes 51 angeordnet. Die Bearbeitung des Untergrundes erfolgt über erste Hartstoffpartikel 57, die an einer der Unterseite 61 gegenüberliegenden Oberseite 62 des Bearbeitungssegmentes 51 angeordnet sind.

Der in FIG. 5A gezeigte Grünling 52 wird liegend aus dem ersten Matrixwerkstoff 56, den ersten Hartstoffpartikeln 57, den zweiten Hartstoffpartikeln 58 und dem zweiten Matrixwerkstoff 59 aufgebaut. Der Grünling 52 wird unter Druckeinwirkung zwischen einem ersten Pressstempel **63,** der eine erste Seitenfläche **64** des Grünlings 52 formt, und einem zweiten Pressstempel **65,** der eine zweite Seitenfläche **66** des Grünlings 52 formt, verdichtet. Dabei verläuft die Pressrichtung zwischen dem ersten Pressstempel 63 und zweiten Pressstempel 65 parallel zur Aufbaurichtung des Grünlings 52. Als Verfahren, die eine Druckeinwirkung auf den Grünling 52 erzielen, eignen sich beispielsweise Kaltpressverfahren oder Warmpressverfahren. Bei Kaltpressverfahren wird der Grünling 52 ausschließlich einer Druckeinwirkung ausgesetzt, während der Grünling 52 bei Warmpressverfahren neben der Druckeinwirkung einer Temperatureinwirkung bis zu Temperaturen von ca. 200 °C ausgesetzt wird.

Beim Verdichten des Grünlings 52 wird zwischen dem ersten Pressstempel 63 und dem Grünling 52 eine erste Folie **67** mit einer ersten Schichtdicke **d₁** und zwischen dem zweiten Pressstempel 65 und dem Grünling 52 eine zweite Folie **68** mit einer zweiten Schichtdicke **d₂** angeordnet. Die erste Folie 67 und zweite Folie 68 bestehen aus einem Folienmaterial **69,** das vom ersten Matrixwerkstoff 56 verschieden ist. Das Folienmaterial 69 weist eine Härte auf, die geringer als die Härte des ersten Matrixwerkstoffes 56 ist. Dadurch, dass die Härte des Folienmaterials 69 geringer als die Härte des ersten Matrixwerkstoffes 56 ist, wird beim Verdichten zwischen dem ersten Pressstempel 63 und zweiten Pressstempel 65 der Überstand der zweiten Hartstoffpartikel 58 an der ersten Seitenfläche 64 und zweiten Seitenfläche 66 erzeugt. Das erfindungsgemäße Verfahren hat den Vorteil, dass der Überstand der zweiten Hartstoffpartikel bei der Herstellung des Bearbeitungssegmentes erzeugt wird und an den Seitenflächen keine Nachbearbeitung der Bearbeitungssegmente erforderlich ist.

Bei dem in FIG. 5B gezeigten Pressling 53 werden die erste Folie 67 und zweite Folie 68 nach dem Verdichten entfernt und der Pressling 53 wird durch Freiformsintern zum Bearbeitungssegment 51 weiterverarbeitet. Beim Freiformsintern wird der Pressling 53 aufgeheizt, bis die Sintertemperatur des ersten Matrixwerkstoffes 56 und die Sintertemperatur des zweiten Matrixwerkstoffes 59 erreicht ist, es erfolgt keine weitere Formgebung. Das Bearbeitungssegment 51 hat seine Endgeometrie beim Verdichten des Grünlings 52 zwischen dem ersten Pressstempel 63 und zweiten Pressstempel 65 erhalten.

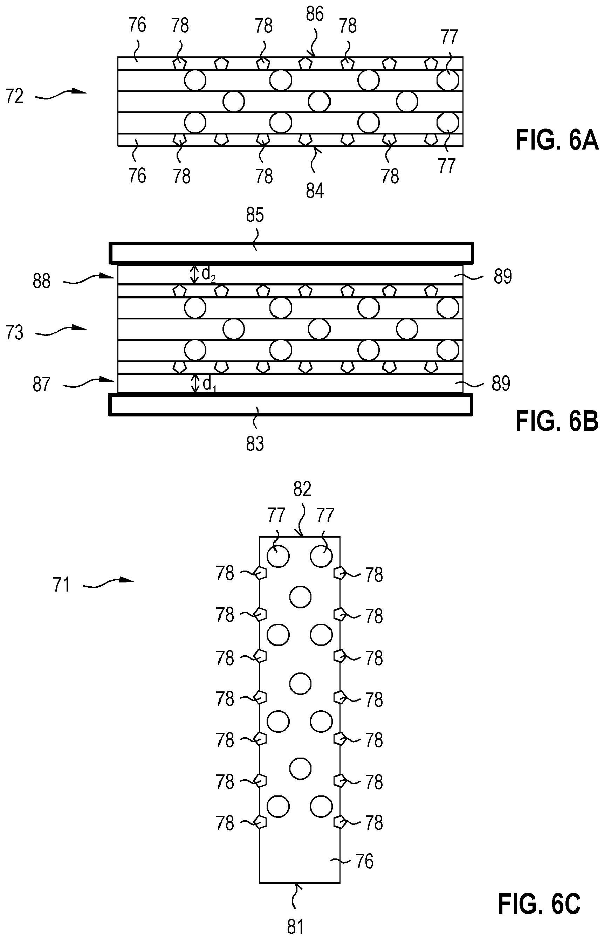

**FIGN. 6A-C** zeigen ein weiteres Bearbeitungssegment **71,** das mit einer alternativen Variante des erfindungsgemäßen Verfahrens zur Herstellung eines Bearbeitungssegmentes hergestellt wurde. Die Herstellung des Bearbeitungssegmentes 71 erfolgt in drei Stufen: In einer ersten Stufe wird ein Grünling **72** hergestellt (FIG. 6A), in einer zweiten Stufe wird der Grünling 72 zu einem Pressling **73** verdichtet (FIG. 6B) und in einer dritten Stufe wird der Pressling 73 zum Bearbeitungssegment 71 weiterverarbeitet (FIG. 6C).

Das Bearbeitungssegment 71 unterscheidet sich vom Bearbeitungssegment 51 der FIG. 5C dadurch, dass das Bearbeitungssegment 71 keine Neutralzone aufweist. Das Bearbeitungssegment 71 wird aus einem ersten Matrixwerkstoff **76,** ersten Hartstoffpartikeln **77** und zweiten Hartstoffpartikeln **78** aufgebaut. Die ersten Hartstoffpartikel 77 werden gemäß einem definierten ersten Partikelmuster und die zweiten Hartstoffpartikel 78 gemäß einem definierten zweiten Partikelmuster angeordnet.

Die ersten Hartstoffpartikel 77 entstammen in der Regel einer ersten Partikelverteilung mit einem ersten mittleren Durchmesser und die zweiten Hartstoffpartikel 58 einer zweiten Partikelverteilung mit einem zweiten mittleren Durchmesser. Im Ausführungsbeispiel der FIGN.6A-C entstammen die ersten Hartstoffpartikel 77 und zweiten Hartstoffpartikel 78 der gleichen Partikelverteilung und weisen den gleichen mittleren Durchmesser auf.

Das Bearbeitungssegment 71 wird mit einer Unterseite **81** mit dem Grundkörper eines Bearbeitungswerkzeuges verbunden. Bei dem in FIG. 6C gezeigten Bearbeitungssegment 71 sind die ersten Hartstoffpartikel 77 gemäß dem definierten ersten Partikelmuster in mehreren Partikelschichten im ersten Matrixwerkstoff 76 angeordnet und die zweiten Hartstoffpartikel 78 sind gemäß dem definierten zweiten Partikelmuster an den Seitenflächen des Bearbeitungssegmentes 71 angeordnet. Die Bearbeitung des Untergrundes erfolgt über erste Hartstoffpartikel 77, die an einer der Unterseite 81 gegenüberliegenden Oberseite **82** des Bearbeitungssegmentes 71 angeordnet sind.

Der in FIG. 6A gezeigte Grünling 72 wird liegend aus dem ersten Matrixwerkstoff 76, den ersten Hartstoffpartikeln 77 und den zweiten Hartstoffpartikeln 78 aufgebaut. Der Grünling 72 wird unter Druckeinwirkung zwischen einem ersten Pressstempel **83,** der eine erste Seitenfläche **84** des Grünlings 72 formt, und einem zweiten Pressstempel **85,** der eine zweite Seitenfläche **86** des Grünlings 72 formt, verdichtet.

Beim Verdichten des Grünlings 72 wird zwischen dem ersten Pressstempel 83 und dem Grünling 72 eine erste Folie **87** mit einer ersten Schichtdicke **d₁** und zwischen dem zweiten Pressstempel 85 und dem Grünling 72 eine zweite Folie **88** mit einer zweiten Schichtdicke **d₂** angeordnet. Die erste und zweite Folie 87, 88 bestehen aus einem Folienmaterial **89,** das vom ersten Matrixwerkstoff 76 verschieden ist. Das Folienmaterial 89 weist eine Härte auf, die geringer als die Härte des ersten Matrixwerkstoffes 76 ist. Dadurch, dass die Härte des Folienmaterials 89 geringer als die Härte des ersten Matrixwerkstoffes 76 ist, wird beim Verdichten zwischen dem ersten Pressstempel 83 und zweiten Pressstempel 85 der Überstand der zweiten Hartstoffpartikel 78 an der ersten Seitenfläche 84 und zweiten Seitenfläche 86 erzeugt.

Bei dem in FIG. 6B gezeigten Pressling 73 werden die erste Folie 87 und zweite Folie 88 nach dem Verdichten nicht entfernt und der Pressling 73 wird mit der ersten und zweiten Folie 87, 88 durch Sintern zum Bearbeitungssegment 71 weiterverarbeitet. Die Eigenschaften des Folienmaterials 89, insbesondere die Schmelztemperatur **T_{Schmelz}** oder der Flammpunkt **T_{Flamm}** des Folienmaterials 89, bestimmen das Verhalten des Folienmaterials 89 beim Sintern.

Wenn die Schmelztemperatur T_{Schmelz} des Folienmaterials 89 niedriger als die Sintertemperatur **T_{Sinter}** des ersten Matrixwerkstoffes 76 ist, schmilzt das Folienmaterial 89 beim Aufheizen des Presslings 73, bevor der erste Matrixwerkstoff 76 seine Sintertemperatur Tsinter erreicht hat; das flüssige Folienmaterial 89 verteilt sich während des Sinterprozesses im ersten Matrixwerkstoff 76 und kann den Sintervorgang als Infiltrat unterstützen. Wenn der Flammpunkt T_{Flamm} des Folienmaterials 89 niedriger als die Sintertemperatur Tsinter des ersten Matrixwerkstoffes 76 ist, verdampft das Folienmaterial 89 beim Aufheizen des Presslings 73, bevor der erste Matrixwerkstoff 76 seine Sintertemperatur Tsinter erreicht hat.

## Patentansprüche

1. Verfahren zur Herstellung eines Bearbeitungssegmentes (11A, 11B; 21A, 21B; 31; 41; 51; 71) für ein Bearbeitungswerkzeug (10A, 10B; 20A, 20B; 30; 40) aus einem pulver- oder granulatförmigen ersten Matrixwerkstoff (56; 76), ersten Hartstoffpartikeln (57; 77), die gemäß einem definierten ersten Partikelmuster angeordnet werden, und zweiten Hartstoffpartikeln (58; 78), die gemäß einem definierten zweiten Partikelmuster angeordnet werden, wobei das Bearbeitungssegment mit einer Unterseite (61; 81) mit einem Grundkörper (12A, 12B; 22A, 22B; 32; 42) des Bearbeitungswerkzeuges (10A, 10B; 20A, 20B; 30; 40) verbunden wird, mit den Schritten:
▪ ein Grünling (52; 72) wird aus dem ersten Matrixwerkstoff (56; 76), den ersten Hartstoffpartikeln (57; 77) und den zweiten Hartstoffpartikeln (58; 78) aufgebaut, wobei die ersten Hartstoffpartikel (57; 77) gemäß dem definierten ersten Partikelmuster und die zweiten Hartstoffpartikel (58; 78) gemäß dem definierten zweiten Partikelmuster im ersten Matrixwerkstoff (56; 76) angeordnet werden,
▪ der Grünling (52; 72) wird unter Druckeinwirkung zwischen einem ersten Pressstempel (63; 83), der eine erste Seitenfläche (64; 84) des Grünlings formt, und einem zweiten Pressstempel (65; 85), der eine zweite Seitenfläche (66; 86) des Grünlings formt, zu einem Pressling (53; 73) verdichtet und
▪ der Pressling (53; 73) wird unter Temperatureinwirkung zum Bearbeitungssegment (51; 71) weiterverarbeitet,
**dadurch gekennzeichnet, dass** beim Verdichten des Grünlings (52; 72) zwischen dem ersten Pressstempel (63; 83) und dem Grünling (52; 72) eine erste Folie (67; 87) aus einem Folienmaterial (69; 89) und zwischen dem zweiten Pressstempel (65; 85) und dem Grünling (52; 72) eine zweite Folie (68; 88) aus dem Folienmaterial (69; 89) angeordnet wird, wobei das Folienmaterial (69; 89) eine Härte aufweist, die geringer als die Härte des ersten Matrixwerkstoffes (56; 76) ist.

2. Verfahren nach Anspruch 1, **dadurch gekennzeichnet, dass** die zweiten Hartstoffpartikel (58; 78) beim Aufbau des Grünlings (52; 72) an der Oberseite (62; 82) vollständig in den ersten Matrixwerkstoff (56; 76) eingebettet werden.

3. Verfahren nach einem der Ansprüche 1 bis 2, **dadurch gekennzeichnet, dass** die erste Folie (67; 87) und zweite Folie (68; 88) nach dem Verdichten vom Pressling (53; 73) entfernt werden.

4. Verfahren nach einem der Ansprüche 1 bis 2, **dadurch gekennzeichnet, dass** der Pressling (53; 73) mit der ersten Folie (67; 87) und zweiten Folie (68; 88) zum Bearbeitungssegment (51; 71) weiterverarbeitet wird.

5. Verfahren nach Anspruch 4, **dadurch gekennzeichnet, dass** die Schmelztemperatur (T_{Schmelz}) des Folienmaterials (68; 88) niedriger als die Sintertemperatur (Tsinter) des ersten Matrixwerkstoffes (56; 76) ist.

6. Verfahren nach Anspruch 4, **dadurch gekennzeichnet, dass** der Flammpunkt (T_{Flamm}) des Folienmaterials (68; 88) niedriger als die Sintertemperatur (T_{Sinter}) des ersten Matrixwerkstoffes (56; 76) ist.
